# EUROPEAN PATENT SPECIFICATION

(11) **EP 3 218 621 B1**
(45) Date of publication and mention of the grant of the patent: **24.06.2020**
(21) Application number: 15828683.1
(22) Date of filing: 11.11.2015
(51) Int. Cl.: F16H 39/20, F03D 5/00

(54) **HYDRAULIC TRANSMISSION AND A METHOD OF TRANSMITTING HYDRAULIC FLUID**
HYDRAULIKGETRIEBE UND VERFAHREN ZUR ÜBERTRAGUNG EINER HYDRAULIKFLÜSSIGKEIT
TRANSMISSION HYDRAULIQUE ET PROCÉDÉ DE TRANSMISSION DE FLUIDE HYDRAULIQUE

(30) Priority: 11.11.2014 NL 2013773
(43) Date of publication of application: 20.09.2017
(73) Proprietor: MECAL Intellectual Property and Standards B.V., 7521 PL Enschede (NL)
(72) Inventor: SCHAAP, Antonius Bernardus, NL-7521 PL Enschede (NL); BRUGHUIS, Franciscus Johannes, NL-7521 PL Enschede (NL)
(74) Representative: V.O.
(86) International application number: PCT/NL2015/050787
(87) International publication number: WO 2016/076716

(56) References cited:
- EP-A2- 2 154 368
- WO-A1-2013/012340
- WO-A2-2012/073277
- CH-A- 249 710
- FR-A- 990 841
- GB-A- 261 984
- GB-A- 459 324
- GB-A- 786 742
- GB-A- 1 489 881
- GB-A- 191 221 705
- US-B1- 7 464 549

## Description

The invention relates to a hydraulic transmission, in particular for a wind turbine.

Hydraulic transmissions are generally known in the art and use pressurized hydraulic fluid to hydraulically transmit power, e.g. as a pump or a motor. Hydraulic transmissions have e.g. been used to convert mechanical energy to electricity. In particular, in wind turbines, hydraulic transmissions have been used in the form of a pump driven by the rotor of the wind turbine to hydraulically transmit power to a hydraulic motor driving an electric generator. A hydraulic transmission for use in a wind turbine has been disclosed in WO2013/012340, and has the advantage over gear transmission that the hydraulic transmission is capable of driving an electric generator that directly feeds the power grid at the required frequency and voltage, independent of the wind turbine rotorspeed by means of a variable high speed hydraulic motor.

A disadvantage of the known hydraulic transmission is that in order to be able to reliably transmit sufficient power, it is of fairly heavy and complex construction. In particular, it includes a rather heavy and complicated cylinder block that houses hydraulic pusher units which have to withstand torque. In case of repair or maintenance, e.g. in case of failure of one of the hydraulic units in the cylinder block the operation of the transmission needs to be interrupted, and the hydraulic transmission needs to be dismantled as a whole.

In particular for use in wind turbines, which are often located at locations that are difficult to access, the above disadvantages are severe. As the hydraulic transmission is housed in the nacelle of the wind turbine, the weight of the transmission increases costs of the mast of the wind turbine, and the costs of erecting the wind turbine. In addition, dismantling of the transmission high up in the nacelle of a turbine is difficult and expensive.

The invention aims to alleviate the above disadvantages. In particular, it is an object of the invention to provide a hydraulic transmission that has a structure that is relatively light, simple and easy to maintain.

Thereto, the invention provides a hydraulic transmission, comprising a pair of rings, one ring of the pair being arranged to surround the other, and a first ring of the pair being disposed for eccentric revolution about a center axis of the second ring, wherein the first and second rings are connected via a number of hydraulic units extending as circumferentially distributed spokes between the first and second rings, and wherein the hydraulic units are hingedly fastened to the first and second rings at respective first and second end portions of the hydraulic units.

By hingedly fastening the hydraulic elements between the rings at both end positions, it may be achieved that the load on the hydraulic units is substantially free of bending moments, that the hydraulic elements may transmit both pull and push forces between the rings, and may be detachable as a unit. This allows for a construction that is relatively light, simple and easy to maintain.

By hingedly fastening the hydraulic units between the rings at both end portions, it may be achieved that the loads on the hydraulic units may be substantially decreased, and may thus be constructed relatively lightly. In particular, the hydraulic unit may then be subjected to a substantially linear force only, and the hydraulic unit may then be substantially free of any bending moments. This may result in a lighter design of the hydraulic unit. Therefore, by using a pair of at least two rings with doubly hinged hydraulic units there between, it is possible to have a hydraulic transmission for use in a wind turbine without a relatively complex heavy cylinder block.

The hydraulic units may be hingedly fastened by conventional hinge joints, e.g. bolts or hinge pins, such that the end portions of the hydraulic unit may have freedom of rotation only, preferably about a single axis. More preferably, the pivot axis of the end portion of the hydraulic unit may be transverse to a plane in which the rings are arranged.

The hydraulic unit may be a hydraulic cylinder, and more preferably, it may be a telescopic hydraulic cylinder comprising a piston rod and a cylinder housing wherein the piston rod of the cylinder may have a substantially linear displacement in a chamber in the cylinder housing. The end portions of the hydraulic cylinder may then be provided with hinge eyes for hinged fastening of the end portions to the rings.

The hydraulic unit may be arranged to displace fluid out of a chamber in the cylinder housing on an inward stroke of the piston rod in which the end portions of the cylinder move towards each other. Further, the hydraulic unit displaces fluid into a chamber in the cylinder housing on an outward stroke of the piston rod in which the end portions of the cylinder move away from each other. This way, the hydraulic unit is double acting, which significantly contributes to increasing the pumped volume per cylinder and thus to reducing the number of cylinders and/or the cylinder dimensions, and thus to reducing its relative weight. Alternatively, the hydraulic unit transfers more power with an equal amount of cylinders having the same size.

Further, the hydraulic unit may at the first and second end portions be provided with fluid connections that are separate from the hinge connections of the end portions. The fluid connections may comprise a combined inlet/outlet closable opening. On an inward stroke, where the end portions of the hydraulic unit may be pushed towards each other, the piston rod may then push fluid in a section of the chamber in the cylinder housing in front of it to leave the cylinder housing via a closable opening at one end portion of the hydraulic unit, and may pull fluid into a section of the chamber of the cylinder housing behind it to enter the cylinder housing via a closable opening at the opposite end portion. On an outward stroke, where the end portions of the hydraulic unit may be pulled away from each other, the situation may then be reversed.

The fluid connections may be arranged to accommodate hinging movement of the hydraulic cylinder relative to the first and second ring respectively. The fluid connections may thereto be embodied as flexible hose connections extending between the end portion of the hydraulic unit and a hydraulic manifold arranged in one of the rings. It is however also possible to use rigid pipe connections with so called hydraulic swivels or pivots. Elegantly, the axis of rotation is coaxial with the hinge axis of the hydraulic swivel such that the swivel may rotate around the same axis of the cylinder hinge.

The hydraulic unit may be provided as a sub assembly, so as to be relatively easy detachable from the first and/or second ring. Preferably, standard hydraulic cylinders e.g. telescopic cylinders may be used that are readily available and mass produced. By having the hydraulic unit as a subassembly, a hydraulic unit can be detached while other hydraulic units arranged between the first and second ring may still be operable, and thus the transmission may not need to be dismantled completely. Also, due to the construction as a subassembly, in case a hydraulic unit fails, it is relatively easy to bypass it as a unit, e.g. together with a diametrically opposing unit, while other hydraulic units continue to be active.

The hydraulic units may each be at least partially enclosed in a fluid tight enclosure, e.g. a flexible bag extending along the unit from the cylinder housing to the piston. By sealing the hydraulic unit separately, any fluid leaked out along a piston of each hydraulic unit may be contained.

Preferably, the first and second rings may be arranged in a same plane. However, it is also possible that the first and second rings are in mutually spaced apart or intersecting planes. It should be noted that the rings need not necessarily be circular in shape, but may e.g. also be oval or somewhat polygonal. Also it should be noted that the rings need not be separate annular structures, but may e.g. be integrated in a plate or rod.

The first ring may be enclosed by the second ring in such a way that the first ring may be an inner ring and the second ring may be an outer ring. The first ring may preferably be eccentrically driven by a first shaft, e.g. a rotor shaft of a wind turbine, such that a center axis of the first ring may orbit along an eccentric trajectory about the center axis of the second ring. The first shaft may, for example, be embodied as a crankshaft that carries eccenters and is preferably arranged coaxially rotatable relative to the center axis of the second ring. The second ring may for example be stationary held, such that it may not move relative to the first ring.

It is, however, also possible that the first ring is an outer ring and the second ring is an inner ring. Then, the first ring may be driven to rotate by a shaft, e.g. a large diameter ring to which the rotor is connected. The second ring may then e.g. be fixed, and is preferably a fixed center shaft. The first ring may then be eccentrically arranged on its shaft and may be disposed for eccentric revolution about the center axis of the second ring, for example, formed by a fixed center shaft.

Further is it also noted that it is also possible that both the first ring and the second ring are rotatably disposed, e.g. in an embodiment wherein the ring that is enclosed by the other ring may slide over a fixed eccenter.

It is further noted that the hydraulic transmission can have a pair of at least two rings wherein the two rings are both arranged for eccentric revolution around a center axis of each other.

In addition, in order to hold the first ring against rotation about its center axis due to torque generated by the eccentric movement, a holding means may be provided. The holding means may be a holding arm that extends between the first and second ring, e.g. a bracket. The arm may be hingedly fastened to the first and/or second ring. The holding means may alternatively or in addition be provided by embodying the hydraulic units as a pair of hydraulic cylinders arranged in a V- shape between the rings, to cancel out the torque exerted by each cylinder. The holding means may further be provided by arranging the hydraulics unit as hydraulic cylinders that extend obliquely between the rings against the direction of eccentric movement to counteract the torque.

The hydraulic transmission may comprise a series of pairs of first and second rings. The rings of each pair may be arranged in a parallel plane to form stages of the transmission. The eccentricity of the rings of subsequent stages may be angularly offset, so as to smoothen the movement and balance the load on the axis. Each pair of rings may have one or more hydraulic units e.g. about 3 to 30 hydraulic units disposed between the first and second ring in one stage.

The invention further relates to use of a linearly telescoping hydraulic cylinder as a hydraulic unit for a hydraulic transmission, in particular for a rotor driven hydraulic pump of a wind turbine.

The invention also relates to a nacelle for a wind turbine, having a nacelle body including a hydraulic transmission, and to a wind turbine with a mast carrying a nacelle provided with a hydraulic transmission.

The invention further relates to a method of transmitting hydraulic fluid, in which hydraulic units are driven by eccentric revolution to displace fluid in inward and outward strokes of a reciprocating movement of the hydraulic units.

The invention will be further elucidated on the basis of an exemplary embodiment which is represented in a drawing. In the drawing:
Fig. 1 shows a schematic front view of a first embodiment of a hydraulic transmission according to the invention;
Fig. 2 shows a cross section of a hydraulic unit of the hydraulic transmission according to Fig.1;
Fig. 3 shows a schematic drawing of a hydraulic unit with a hydraulic swivel for use in the hydraulic transmission of Fig. 1;
Fig. 4A shows a schematic hydraulic diagram of a hydraulic valve system for use in the hydraulic transmission of Fig. 1;
Fig. 4B shows a schematic drawings of a tidal turbine system;
Fig. 4C shows a schematic drawings of a distributed tidal turbine system;
Fig. 5 shows a schematic front view of a second embodiment of the hydraulic transmission;
Fig. 6 shows a schematic front view of a third embodiment of the hydraulic transmission;
Fig. 7 shows a schematic front view of the hydraulic transmission with a stabilizer means;
Fig. 8 shows a schematic perspective view of the hydraulic transmission according to the invention.

It is noted that the figures are merely schematic representations of a preferred embodiment of the invention, which is given here by way of non-limiting exemplary embodiment. In the description, the same or similar part and elements have the same or similar reference signs.

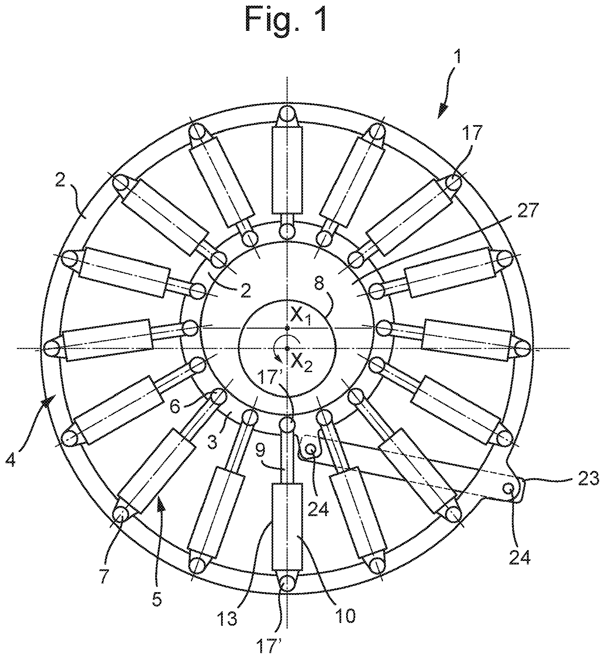

Fig. 1 shows a schematic front view of a hydraulic transmission 1. The hydraulic transmission 1 may comprise a pair 2 of rings wherein one ring 4 of the pair 2 may be arranged to surround the other ring 3 such that a first ring 3 may be enclosed by a second ring 4. The second ring 4 may be connected, and preferably fixed, to a nacelle frame (not shown) of a wind turbine such that it may not move relative to the first ring 3. The first ring 3 of the pair 2 may be disposed for eccentric revolution about a center axis X₂ of the second ring 4 such that a center axis X₁ of the first ring 3 may orbit around the center axis X₂ of the second ring 4. This eccentric revolution of the first ring 3 may be driven by a first shaft 8, such as a crankshaft that carries an eccenter 27, and which may be massive or hollow. The eccenter on the shaft 8 may be positioned in front or in the rear of a bearing 28 of the shaft 8. The first shaft 8 may be arranged coaxially rotatable relative to the centerline of the second ring 4.

The first 3 and second 4 rings may be connected via a number of hydraulic units 5 extending as circumferentially distributed spokes between the first 3 and second rings 4. The hydraulic units 5 may be hingedly fastened to the first 3 and second 4 rings at respective first 6 and second 7 , in this exemplary embodiment inner 6 and respectively outer 7 end portions of the hydraulic units 5 by fastening means 17. The hydraulic unit 5 may preferably be a linear telescopic hydraulic cylinder, more preferably a standard linear telescoping hydraulic cylinder that are readily available and mass produced.

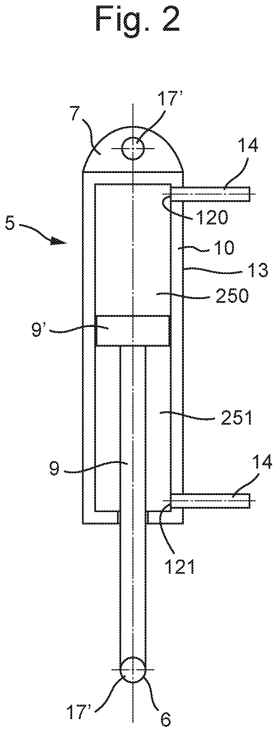

In Fig. 2 is shown that the hydraulic unit 5 may comprise a piston rod 9 and a cylinder housing 10 wherein chambers 250 251 of the hydraulic unit 5 may be filled with a fluid, e.g. hydraulic oil or water. The driving forces may be in line with the movement of the piston rod 9 such that a side force acting by the piston 9' on the cylinder house may be minimal, and in particular almost zero.

Further, at the first 6 and second 7 end portion of the hydraulic unit 5 one of the fastening means 17 may be arranged to hingedly attach the hydraulic unit 5 to the first 3 and second 4 rings. Specifically, hinge means 17' may be provided at the piston rod 9 and at the cylinder house 10. Further, the hydraulic unit 5 may be provided with inlet/outlet closable openings 120 121 near the first 6 and second 7 end portions. It is noted that the inlet/outlet closable openings 120 121 may be positioned separated from the first 6 and second 7 end portions, particularly it may be separated from the hinge connections of the end portions 6 7. Preferably, the inlet/outlet closable openings 120 121 is arranged at a side 13 of the cylinder house 10. It is noted as shown in Fig 2. that the inlet/ outlet closable openings 120 121 may be arranged as a single piece i.e. combining the inlet and the outlet, depending on the direction of the movement of the piston 9' in the cylinder house 10. However, it is also possible that the inlet and the outlet of the inlet/outlet openings 120 121 may be separated.

In addition, the hydraulic unit 5 may be arranged to displace fluid on an inward stroke in which the end portions 6 7 of the hydraulic unit 5 can move towards each other and fluid inside the chamber 25 may be pumped out of the cylinder house 10 via the inlet/outlet closable opening 120 arranged near the second end portion 7. The hydraulic unit 5 may further have an outward stroke in which the end portions 6 7 move away from each other such that fluid in the chamber 25 may be pumped out the cylinder house 10 via the inlet/outlet opening 121 arranged near the first end portion 6. By using double action of the hydraulic unit 5 the pumped volume increases and the hydraulic transmission 1 may be designed of a smaller size and lighter. It is further noted that the hydraulic units 5 can be switched on and off by means of valves known to the skilled person such that in case a hydraulic unit 5 fails, it is relatively easy to bypass it as a unit, e.g. together with a diametrically opposing unit, while other hydraulic units 5 continue to be active.

Further, the hydraulic unit 5 may be at the first 6 and second 7 end portions coupled to the first 3 and second 4 ring via fluid connections 14 wherein the fluid connections 14 may include, for example, flexible tube or hose connections and/or hydraulic sealed swivels. These fluid connections 14 are arranged to transfer fluid from the hydraulic unit 5 to a high pressure fluid manifold (not shown) and a low pressure fluid manifold (not shown) arranged at the second ring 4 via, for example, tubes 15, preferably flexible hoses.

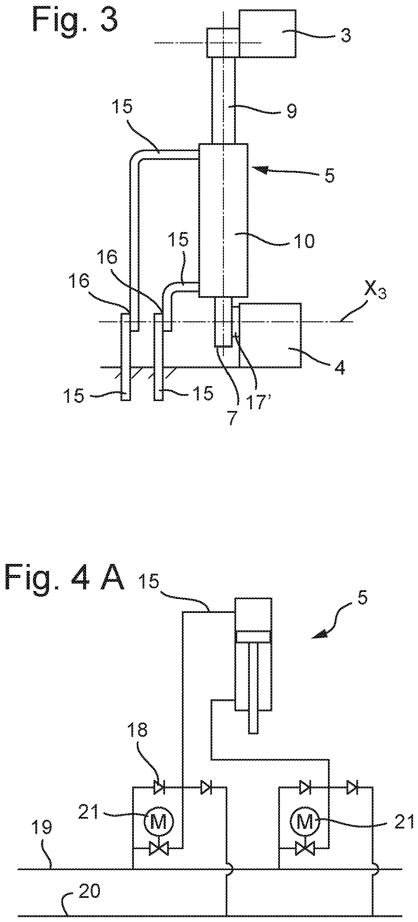

Likewise, as shown in Fig.3 it is possible to use stiff metal pipes 15, instead of flexible hoses, due to service life considerations. Particularly, hydraulic swivels 16, preferably with its rotation axis coaxial with the hinge axis X₃ of the hinge connection at the second end portion 7, may then be used such that hinge movement of hydraulic unit 5, due to eccentric revolution of the first ring 3, may be accommodated. By having substantially the same rotation axis X₃, the swivel 16 may have the same rotation behavior as the hinge connection of the hydraulic unit 5 at the second end portion 7, and the swivels 16 may be non-load bearing.

In Fig. 4A, a lay-out of the hydraulic system is shown wherein in the manifolds (not shown) check valves 18 may be provided to direct the fluid from a lower pressure circuit 19 to a high pressure circuit 20. Additionally, there may also be a motor activated idling valve 21, which can make the hydraulic transmission 1 variable by idling hydraulic units 5. For example, one of the double actions of the hydraulic unit 5 may be idled.

Further, the hydraulic transmission 1 may have a modular structure e.g. the hydraulic units 5 may be detachable one by one from the first 3 and second 4 ring as a subassembly, so that the hydraulic transmission 1 does not need to be dismantled completely for repair and/or maintenance.

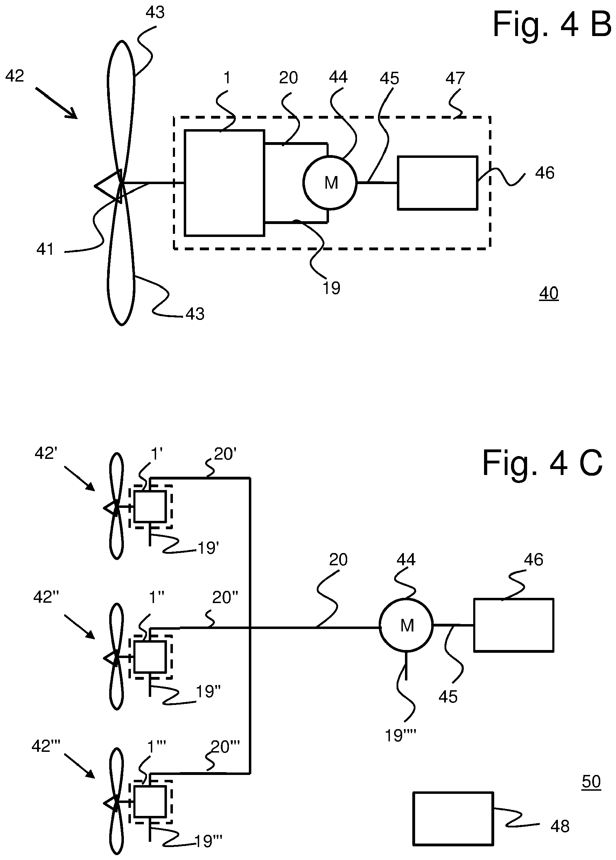

Figure 4B shows a turbine system 40. The turbine system 40 comprises a hydraulic transmission 1. The hydraulic transmission 1 is driven by means of a turbine shaft 41 that is connected to a rotor 42. The rotor 42 comprises blades 43. The rotor 42 may be driven to motion by exposing the blades 43 to a moving fluid. The fluid may be air if the turbine system 40 is implemented as a wind turbine. Alternatively, the turbine system 40 may be implemented as a water turbine, for example in a tidal turbine. In the latter implementation, the fluid is water and sea water in particular. The sea water moves due to tidal movements of the sea. Other liquids for moving the rotor 42 may be envisaged as well.

The hydraulic transmission 1 is coupled to a hydraulic motor 44 via a high pressure circuit 20 and a lower pressure circuit 19. The hydraulic motor 44 is driven by virtue of a difference in hydraulic pressure in the high pressure circuit 20 on one hand and in the lower pressure circuit 19 on the other hand. The hydraulic motor 44 is connected to a generator 46 by means of a driving shaft 45 for generating electrical energy. Components of the turbine system 40 are provided in a turbine housing 47.

Figure 4C shows a further turbine system 50. The turbine system 50 is intended to be used as a tidal turbine system, at an underwater level. The turbine system 50 comprises a first hydraulic transmission 1', a second hydraulic transmission 1" and a third hydraulic transmission 1"'. The first hydraulic transmission 1' is driven by a first rotor 42', the second hydraulic transmission 1" is driven by a second rotor 42" and a third hydraulic transmission 1"' is driven by a third rotor 42".

The first hydraulic transmission 1' is provided with a first lower pressure circuit 19'. The first lower pressure circuit 19' has an open end towards the sea. This allows for use of sea water as a hydraulic fluid in the system. Furthermore, this removes a need for a closed conduit in a lower pressure circuit, thus decreasing cost. In the same fashion, the second hydraulic transmission 1" is provided with a second lower pressure circuit 19"and the third hydraulic transmission 1"' is provided with a third lower pressure circuit 19"'. All these lower pressure circuits comprise an intake for taking in seawater. Alternatively, a closed lower pressure circuit may be provided.

The first hydraulic transmission 1' is provided with a first high pressure circuit 20', the second hydraulic transmission 1" is provided with a second high pressure circuit 20" and the third hydraulic transmission 1"' is provided with a third high pressure circuit 20'''. The three high pressure circuits or high pressure conduits are connected to a main high pressure circuit 20 or a main high pressure conduit 20. The main high pressure circuit 20 is connected to a hydraulic motor 44. In this way, seawater compressed by the hydraulic transmission is used for driving the hydraulic motor 44. The hydraulic motor 44 comprises an outlet 19"" as part of a low pressure circuit for dispensing of seawater having driven the hydraulic motor 44.

The hydraulic motor 44 is connected to the generator 46 via a driving shaft 45 for driving the generator 46. This constellation, which comprises multiple hydraulic systems 1 and one generator 46 is advantageous for several reasons. First, as less generators are required, less cost is involved. With only a single generator 46, a larger generator may be required. On the other hand, larger generator involves more cost. With this implementation, a balance may be sought from a cost perspective. Second, smaller hydraulic systems and rotors may be used. And advantage is that this allows variations in driving speed and generated pressure to be evened out.

While seeking this balance, it should be noted that the distributed turbine system 50 may be implemented with a centralized control system 48 for controlling the distributed turbine system 50. This allows electrical systems per turbine to be kept relatively simple. This, in turn, reduces the chance of failure of individual turbines.

The first 3 and second 4 rings may be arranged in the same plane as shown in Fig.1 but it is also possible that the first 3 and second 4 rings may be arranged in mutually spaced apart planes. For example, the first ring 3 may be arranged in a plane in front of or behind a plane of the second ring 2. Further, the hydraulic units 5 may then preferably be hingedly fastened with the first 3 and second 4 rings by, for example, a ball and socket joint.

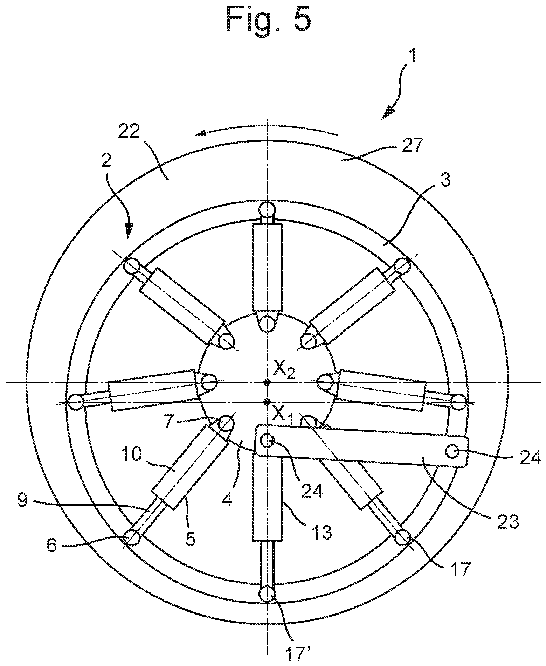

In Fig. 1 the first ring 3 may be an inner ring enclosed by the second ring 4 wherein the second ring 4 may be an outer ring. Preferably, the second ring 4 is held stationary by, for example, the nacelle of the wind turbine (not shown). However, according to another embodiment of the invention the first ring 3 may be the outer ring and the second ring 4 may be the inner ring as shown in Fig. 5. In that case, the first ring 3 i.e. the outer ring, is arranged for eccentric revolution around a center axis of the second ring i.e. the inner ring. The first ring may then be driven by a second shaft 22 for example a large eccentric diameter rotor ring which may be arranged coaxially rotatable relative to the centerline X₂ of the second ring 4. The hydraulic transmission 1 may then be placed inside the second shaft 22.

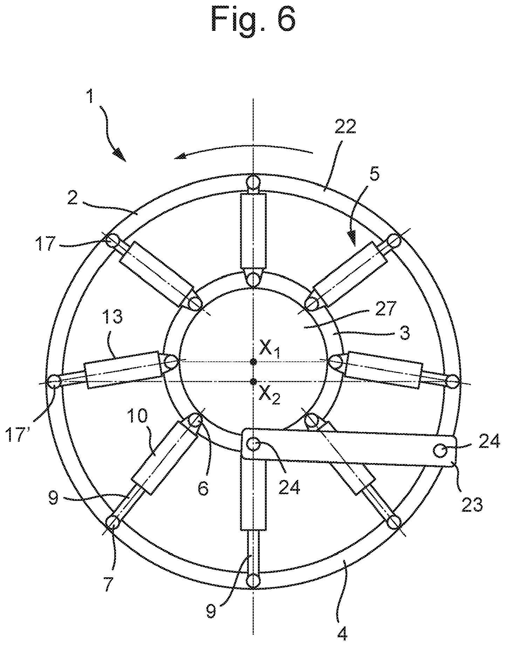

In Fig. 6 another embodiment is shown, wherein the first ring 3 may be the inner ring and the second ring 4 may be the outer ring. In addition, the second ring 4 may be driven by the second shaft 22 such that it may rotate around the center axis X₂. Further, the first ring 3 may also rotate along with the second ring 4 and sliding over a fixed eccenter such that the first ring 3 may be arranged to have an eccentric revolution about the center axis X₂ of the second ring 4. This may cause the hydraulic units 5 to push and pull such that fluid inside the chamber 25 of the hydraulic unit 5 may be displaced.

Further, as shown in Fig.1 a holding means 23 may be provided to hold the first ring 3 against rotation around its center axis X₁. In this exemplary embodiment the holding means 23 may be a stiffed bracket, for example, a stabilizer arm which is hingedly connected to the first 3 and second ring 4 at its end portions 24. Further, as shown in Fig.6, the holding means may also be used to drive the first ring 3 to rotate along with the second ring 4.

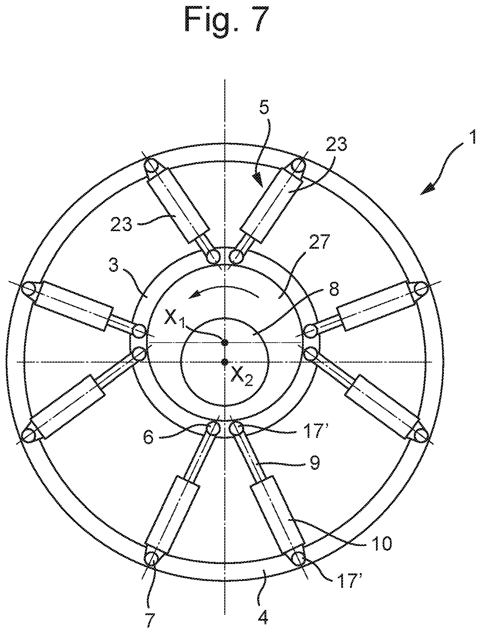

Alternatively or additionally, it is also possible that a moment around a center axis of the first shaft 8, that may be exerted by the cylinder 5, may be used to prevent the first ring 3 from rotation. Particularly, by regulating the pressure in the cylinder 5, the cylinder 5 may exert the right amount of torque to keep the first ring 3 at a desired position. In Fig. 7 it is shown that this may be done by arranging pairs of the hydraulic units under an angle with the radius of the rings. Preferably, pairs of the hydraulic units may have a V-arrangement, however, it is also possible that the hydraulic units may be tilted in one direction, preferably against the rotation direction of the first and/or second shaft.

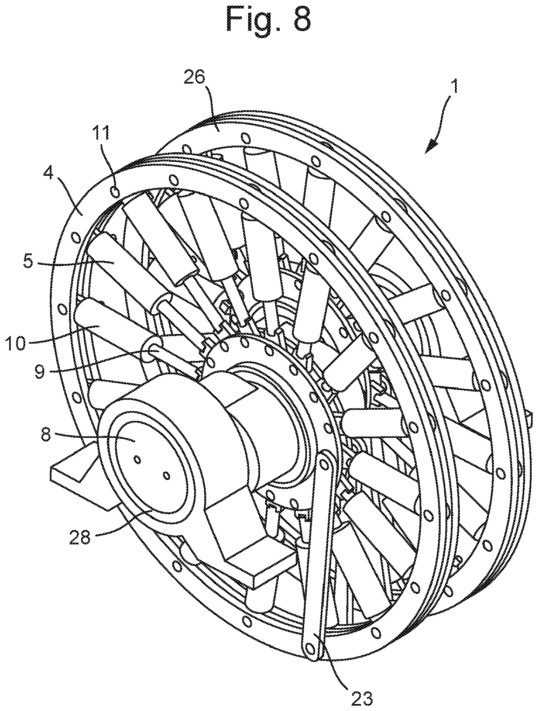

In Fig. 8 a perspective view is shown of the hydraulic transmission that may comprise a series of pairs of first and second rings. The rings of each pair may be arranged in parallel planes to form stages 26 of the transmission, wherein the stages 26 may be driven by the first shaft 8 and/or second shaft 22. Each stage 26 may comprise a number of hydraulic units such as 2 to 30 units.

As for the purpose of this disclosure, it is pointed out that technical features which have been described may be susceptible of functional generalization. It is further pointed out that - insofar as not explicitly mentioned- such technical features can be considered separately from the context of the given exemplary embodiment, and can further be considered separately from the technical features with which they cooperate in the context of the example.

It is pointed out that the invention is not limited to the exemplary embodiments represented here, and that many variants are possible.

For example, the pair of rings may not be limited to two rings and more rings may be used wherein between each rings, hydraulic units may be disposed to connect the rings with each other. Further, the inner ring of the pair of rings may be driven by a drive such as a rotor shaft of a wind turbine, but it may also be possible that the outer ring of the pair of rings is driven by a drive, such a big diameter hollow ring shaft. Additionally, the transmission may be a hydraulic generator, in which case the unit may act as a hydraulic pump or a hydraulic motor, in which the hydraulic unit may act as a motor.

Such variants will be clear to the skilled person, and are considered to be within the scope of the invention as defined in the appended claims.

## Claims

1. A hydraulic transmission (1) for a wind turbine or tidal turbine, comprising a pair of rings (2), one ring (2) of the pair being arranged to surround the other (2), and a first ring (2) of the pair being disposed for eccentric revolution about a center axis (8) of the second ring, **characterized in that** the first and second rings are connected via a number of hydraulic units (5) extending as circumferentially distributed spokes between the first and second rings, and wherein the hydraulic units are hingedly fastened to the first and second rings at respective first (6) and second (7) end portions of the hydraulic units;
wherein:
- the hydraulic units are provided with fluid connections (14) arranged to transfer fluid from the hydraulic units to a high pressure fluid manifold and a low pressure fluid manifold; and
- the hydraulic unit is arranged to pump fluid out of the hydraulic unit on an inward stroke in which the end portions of the hydraulic units move towards each other, as well as on an outward stroke in which the end portions move away from each other.

2. A hydraulic transmission (1) according to claim 1, wherein the hydraulic unit comprises a linear telescopic hydraulic cylinder (5).

3. A hydraulic transmission (1) according to any one of the preceding claims, wherein the hydraulic unit (5) is at the first (6) and second (7) end portions connected to the first (2) and second ring (2) via fluid connections (14) that are arranged to accommodate hinging movement of the hydraulic cylinder relative to the first and second ring respectively.

4. A hydraulic transmission (1) according to claim 3, wherein the fluid connections (14) include flexible hose connections and/or hydraulic swivels (16).

5. A hydraulic transmission (1) according to any one of the preceding claims, wherein the first (2) and second rings (2) are arranged in the same plane.

6. A hydraulic transmission (1) according to any one of the preceding claims, wherein the first ring (2) is an inner ring and the second ring (2) is an outer ring.

7. A hydraulic transmission (1) according to any one of the preceding claims, wherein a holding means (23) is provided to hold the first ring against rotation about its center axis.

8. A hydraulic transmission (1) according to claim 7, wherein the holding means (23) is a holding arm that extends between the first (2) and second (2) ring.

9. A hydraulic transmission (1) according to any one of the preceding claims, wherein the first ring (2) is eccentrically carried on a first shaft (8), and wherein the first shaft is arranged coaxially rotatable relative to the centerline of the second ring (2).

10. A nacelle for a wind turbine, comprising a nacelle body housing a hydraulic transmission (1) according to any of the preceding claims, in particular according to claim 9 with the shaft (41) carrying a rotor hub, and wherein the second ring (2) being fixedly held by the nacelle body.

11. A wind turbine comprising a mast carrying a nacelle according to claim 10, and rotor (42) carried on the rotor hub of the nacelle.

12. A tidal turbine comprising a turbine housing, a rotor, a hydraulic transmission (1) according to any of the preceding claims 1-9, in particular according to claim 9 with the shaft (8) carrying a rotor hub, and wherein the second ring (2) being fixedly held by the turbine housing.

13. A tidal turbine system (50) comprising at least one tidal turbine according to claim 12, a hydraulic motor (44) coupled to the hydraulic transmission (2) via a high pressure fluid conduit (20) for providing a fluid under pressure to the hydraulic motor for driving the hydraulic motor and a generator (46) coupled to the hydraulic motor for driving the generator.

14. A method of transmitting hydraulic fluid in a hydraulic transmission (1) for a wind turbine or tidal turbine, comprising a pair of rings (2), one ring (2) of the pair being arranged to surround the other (2), and a first ring (2) of the pair being disposed for eccentric revolution about a center axis (8) of the second ring, wherein the first and second rings are connected via a number of hydraulic units extending as circumferentially distributed spokes between the first and second rings, and wherein the hydraulic units are hingedly fastened to the first and second rings at respective first (6) and second (7) end portions of the hydraulic units (5), the method of transmitting hydraulic fluid, in which hydraulic units are driven by eccentric revolution to pump fluid out of the hydraulic unit in inward and outward strokes of a reciprocating linear movement, wherein:
- the hydraulic units are provided with fluid connections (14) arranged to transfer fluid from the hydraulic units to a high pressure fluid manifold and a low pressure fluid manifold; and
- the hydraulic unit is arranged to pump fluid out of the hydraulic unit on an inward stroke in which the end portions of the hydraulic units move towards each other, as well as on an outward stroke in which the end portions move away from each other.

## Patentansprüche

1. Hydraulisches Getriebe (1) für eine Windturbine oder eine Gezeitenturbine,
umfassend ein Paar von Ringen (2), wobei ein Ring (2) des Paares angeordnet ist, um den anderen (2) zu umgeben, und ein erster Ring (2) des Paares zur exzentrischen Umdrehung um eine Mittelachse (8) des zweiten Rings angeordnet ist, **dadurch gekennzeichnet, dass** der erste und der zweite Ring über eine Anzahl von Hydraulikeinheiten (5) verbunden sind, die sich als in Umfangsrichtung verteilte Speichen zwischen dem ersten und dem zweiten Ring erstrecken, und wobei die Hydraulikeinheiten an den ersten und zweiten Ringen des jeweiligen ersten (6) und zweiten (7) Endabschnitts der Hydraulikeinheiten mit Scharnieren befestigt sind;
wobei:
- die Hydraulikeinheiten mit Fluidverbindungen (14) versehen sind, die angeordnet sind, um Fluid von den Hydraulikeinheiten zu einem Hochdruckfluidverteiler und einem Niederdruckfluidverteiler zu übertragen; und
- die Hydraulikeinheit so angeordnet ist, dass sie Fluid bei einem Einwärtshub, bei dem sich die Endabschnitte der Hydraulikeinheiten aufeinander bewegen, sowie bei einem Auswärtshub, bei dem sich die Endabschnitte voneinander entfernen, aus der Hydraulikeinheit herauspumpt.

2. Hydraulisches Getriebe (1) nach Anspruch 1, wobei die Hydraulikeinheit einen linearen Teleskophydraulikzylinder (5) umfasst.

3. Hydraulisches Getriebe (1) nach einem der vorhergehenden Ansprüche, wobei die Hydraulikeinheit (5) am ersten (6) und zweiten (7) Endabschnitt mit dem ersten (2) und zweiten Ring (2) über Fluidverbindungen (14) verbunden ist, die so angeordnet sind, dass sie die Scharnierbewegung des Hydraulikzylinders relativ zum ersten und zweiten Ring aufnehmen.

4. Hydraulisches Getriebe (1) nach Anspruch 3, wobei die Fluidverbindungen (14) flexible Schlauchverbindungen und/oder hydraulische Schwenkteile (16) umfassen.

5. Hydraulisches Getriebe (1) nach einem der vorhergehenden Ansprüche, wobei der erste (2) und der zweite Ring (2) in derselben Ebene angeordnet sind.

6. Hydraulisches Getriebe (1) nach einem der vorhergehenden Ansprüche, wobei der erste Ring (2) ein Innenring und der zweite Ring (2) ein Außenring ist.

7. Hydraulisches Getriebe (1) nach einem der vorhergehenden Ansprüche, wobei ein Haltemittel (23) vorgesehen ist, um den ersten Ring gegen eine Drehung um seine Mittelachse zu halten.

8. Hydraulisches Getriebe (1) nach Anspruch 7, wobei das Haltemittel (23) ein Haltearm ist, der sich zwischen dem ersten (2) und dem zweiten (2) Ring erstreckt.

9. Hydraulisches Getriebe (1) nach einem der vorhergehenden Ansprüche, wobei der erste Ring (2) auf einer ersten Welle (8) exzentrisch getragen wird, und wobei die erste Welle relativ zur Mittellinie des zweiten Rings (2) koaxial drehbar angeordnet ist.

10. Gondel für eine Windturbine, umfassend einen Gondelkörper, in der ein hydraulisches Getriebe (1) nach einem der vorhergehenden Ansprüche untergebracht ist, insbesondere nach Anspruch 9, mit der Welle (41), die eine Rotornabe trägt, und wobei der zweite Ring (2) vom Gondelkörper fest gehalten werden.

11. Windturbine, umfassend einen Mast, der eine Gondel nach Anspruch 10 trägt, und einen Rotor (42), der an der Rotornabe der Gondel getragen wird.

12. Gezeitenturbine, umfassend ein Turbinengehäuse, einen Rotor, ein hydraulisches Getriebe (1) nach einem der vorhergehenden Ansprüche 1 bis 9, insbesondere nach Anspruch 9, wobei die Welle (8) eine Rotornabe trägt und wobei der zweite Ring (2) vom Turbinengehäuse fest gehalten wird.

13. Gezeitenturbinensystem (50), umfassend wenigstens eine Gezeitenturbine nach Anspruch 12, einen Hydraulikmotor (44), der über eine Hochdruckfluidleitung (20) mit dem hydraulischen Getriebe (2) gekoppelt ist, um ein unter Druck stehendes Fluid für den Hydraulikmotor zum Antreiben des Hydraulikmotors und eines Generators (46), der mit dem Hydraulikmotor zum Antreiben des Generators gekoppelt ist, bereitzustellen.

14. Verfahren zum Übertragen von Hydraulikfluid in einem hydraulischen Getriebe (1) für eine Windturbine oder Gezeitenturbine, umfassend ein Paar von Ringen (2), wobei ein Ring (2) des Paares so angeordnet ist, dass er den anderen (2) umgibt, und ein erster Ring (2) des Paares zur exzentrischen Umdrehung um eine Mittelachse (8) des zweiten Rings angeordnet ist, wobei der erste und der zweite Ring über eine Anzahl von Hydraulikeinheiten verbunden sind, die sich als in Umfangsrichtung verteilte Speichen zwischen dem ersten und dem zweiten Ring erstrecken und wobei die Hydraulikeinheiten an dem ersten und zweiten Ring an den jeweiligen ersten (6) und zweiten (7) Endabschnitten der Hydraulikeinheiten (5) mit Scharnieren befestigt sind, wobei das Verfahren zum Übertragen von Hydraulikfluid, bei Hydraulikeinheiten durch exzentrische Umdrehung angetrieben werden, um Fluid in Einwärts- und Auswärtshüben einer sich hin- und herbewegenden linearen Bewegung aus der Hydraulikeinheit herauszupumpen, wobei:
- die Hydraulikeinheiten mit Fluidverbindungen (14) versehen sind, die angeordnet sind, um Fluid von den Hydraulikeinheiten zu einem Hochdruckfluidverteiler und einem Niederdruckfluidverteiler zu übertragen; und
- die Hydraulikeinheit so angeordnet ist, dass sie Fluid bei einem Einwärtshub, bei dem sich die Endabschnitte der Hydraulikeinheiten aufeinander bewegen, sowie bei einem Auswärtshub, bei dem sich die Endabschnitte voneinander entfernen, aus der Hydraulikeinheit herauspumpt.

## Revendications

1. Transmission hydraulique (1) d'une éolienne ou d'une hydrolienne, comprenant une paire d'anneaux (2), un anneau (2) de la paire étant agencé afin d'entourer l'autre (2), et un premier anneau (2) de la paire étant disposé afin d'effectuer une révolution excentrique autour de l'axe central (8) du second anneau,
**caractérisée en ce que** les premier et second anneaux sont connectés par l'intermédiaire d'un certain nombre d'unités hydrauliques (5) qui s'étendent comme des rayons répartis de manière circonférentielle entre les premier et second anneaux, et où les unités hydrauliques sont fixées de manière articulée sur les premier et second anneaux (6) au niveau des premières (6) et secondes (7) extrémités respectives des unités hydrauliques ;
où :
- les unités hydrauliques sont dotées de connexions de fluide (14) agencées afin de transférer un fluide à partir des unités hydrauliques jusqu'à un collecteur de fluide à haute pression et à un collecteur de fluide à basse pression ; et
- l'unité hydraulique est agencée afin de pomper le fluide hors de l'unité hydraulique lors d'une course vers l'intérieur dans laquelle les extrémités des unités hydrauliques se déplacent les unes vers les autres, ainsi que lors d'une course vers l'extérieur dans laquelle les extrémités se déplacent en s'éloignant les unes des autres.

2. Transmission hydraulique (1) selon la revendication 1, où l'unité hydraulique comprend un cylindre hydraulique télescopique linéaire (5).

3. Transmission hydraulique (1) selon l'une quelconque des revendications précédentes, où l'unité hydraulique (5) se situe au niveau des premières (6) et secondes (7) extrémités connectées aux premier (2) et second (2) anneaux par l'intermédiaire des connexions de fluide (14) qui sont agencées afin de recevoir le déplacement articulé du cylindre hydraulique par rapport aux premier et second anneaux respectivement.

4. Transmission hydraulique (1) selon la revendication 3, où les connexions de fluide (14) comprennent des connexions de tuyau flexible et / ou des joints articulés hydrauliques (16).

5. Transmission hydraulique (1) selon l'une quelconque des revendications précédentes, où les premier (2) et second (2) anneaux sont agencés dans le même plan.

6. Transmission hydraulique (1) selon l'une quelconque des revendications précédentes, où le premier anneau (2) est un anneau intérieur, et le second anneau (2) est un anneau extérieur.

7. Transmission hydraulique (1) selon l'une quelconque des revendications précédentes, où des moyens de blocage (23) sont prévus afin d'empêcher le premier anneau de tourner autour de son axe central.

8. Transmission hydraulique (1) selon la revendication 7, où les moyens de blocage (23) sont constitués par un bras de blocage qui s'étend entre les premier (2) et second (2) anneaux.

9. Transmission hydraulique (1) selon l'une quelconque des revendications précédentes, où le premier anneau (2) est porté de manière excentrique sur un premier arbre (8), et où le premier arbre est agencé afin de pouvoir tourner coaxialement par rapport à la ligne médiane du second anneau (2).

10. Nacelle d'une éolienne, comprenant un corps de nacelle qui loge une transmission hydraulique (1) selon l'une quelconque des revendications précédentes, en particulier selon la revendication 9, l'arbre (41) portant un moyeu de rotor, et où le second anneau (2) est maintenu fixement par le corps de nacelle.

11. Éolienne comprenant un mât qui porte une nacelle selon la revendication 10, et un rotor (42) porté sur le moyeu de rotor de la nacelle.

12. Hydrolienne comprenant un logement de turbine, un rotor, une transmission hydraulique (1) selon l'une quelconque des revendications 1 à 9, en particulier selon la revendication 9, l'arbre (8) portant un moyeu de rotor, et où le second anneau (2) est maintenu fixement par le logement de turbine.

13. Système d'hydrolienne (50) comprenant au moins une hydrolienne selon la revendication 12, un moteur hydraulique (44) accouplé à la transmission hydraulique (2) par l'intermédiaire d'un conduit de fluide à haute pression (20) destiné à fournir un fluide sous pression au moteur hydraulique afin d'entraîner le moteur hydraulique, et un générateur (46) accouplé au moteur hydraulique afin d'entraîner le générateur.

14. Procédé destiné à transmettre un fluide hydraulique dans une transmission hydraulique (1) d'une éolienne ou d'une hydrolienne, comprenant une paire d'anneaux (2), un anneau (2) de la paire étant agencé afin d'entourer l'autre (2), et un premier anneau (2) de la paire étant disposé afin d'effectuer une révolution excentrique autour de l'axe central (8) du second anneau, où les premier et second anneau sont connectées par l'intermédiaire d'un certain nombre d'unités hydrauliques qui s'étendent comme des rayons répartis de manière circonférentielle entre les premier et second anneaux, et où les unités hydrauliques sont fixées de manière articulée sur les premier et second anneaux (6) au niveau des premières (6) et secondes (7) extrémités respectives des unités hydrauliques (5),
le procédé étant destiné à transmettre un fluide hydraulique, dans lequel des unités hydrauliques sont entraînées par une révolution excentrique afin de pomper le fluide hors de l'unité hydraulique lors de courses vers l'intérieur et vers l'extérieur dans un mouvement linéaire alternatif, où :
- les unités hydrauliques sont dotées de connexions de fluide (14) agencées afin de transférer un fluide à partir des unités hydrauliques jusqu'à un collecteur de fluide à haute pression et à un collecteur de fluide à basse pression ; et
- l'unité hydraulique est agencée afin de pomper le fluide hors de l'unité hydraulique lors d'une course vers l'intérieur dans laquelle les extrémités des unités hydrauliques se déplacent les unes vers les autres, ainsi que lors d'une course vers l'extérieur dans laquelle les extrémités se déplacent en s'éloignant les unes des autres.
